# FASCICULE DE BREVET EUROPEEN

(11) **EP 3 985 769 B1**
(45) Date de publication et mention de la délivrance du brevet: **03.12.2025**
(21) Numéro de dépôt: 21201697.6
(22) Date de dépôt: 08.10.2021
(51) Int. Cl.: H01M 10/04, H01M 10/0525, H01M 50/211, H01M 50/224, H01M 50/264, H01M 50/505, H01M 50/516, H01M 50/528, H01M 50/54

(54) **MODULE DE BATTERIE À EMPILEMENT D'ACCUMULATEURS À EMBALLAGE SOUPLE LOGES DANS DES SUPPORTS FIXES ENTRE EUX PAR ENCLIQUETAGE OU CLIPSAGE ET SUPPORTANT DES COSSES EN CONTACT AVEC PRESSION AVEC LES BORNES DES ACCUMULATEURS**
BATTERIEMODUL MIT STAPEL VON WEICH VERPACKTEN AKKUMULATOREN, DIE IN FESTEN HALTERUNGEN ZWISCHEN IHNEN DURCH KNAPPEN ODER KLIPPEN UND STÜTZKLEMMEN IN DRUCKKONTAKT MIT DEN AKKUMULATORKLEMMEN GEHÄUSET WERDEN.
BATTERY MODULE WITH STACK OF FLEXIBLE PACKAGED ACCUMULATORS HOUSED IN FIXED SUPPORTS BETWEEN THEM BY SNAPPING OR CLIPPING AND SUPPORTING TERMINALS IN PRESSURE CONTACT WITH THE ACCUMULATOR TERMINALS.

(30) Priorité: 15.10.2020 FR 2010587
(43) Date de publication de la demande: 20.04.2022
(73) Titulaire: Commissariat à l'Energie Atomique et aux Energies Alternatives, 75015 Paris (FR)
(72) Inventeur: DEWULF, Frédéric, 38054 GRENOBLE CEDEX 09 (FR); FERRIER, Nicolas, 38054 GRENOBLE CEDEX 09 (FR)
(74) Mandataire: Ipsilon

(56) Documents cités:
- WO-A1-2012/120091
- DE-A1- 102010 055 609
- FR-A1- 2 973 948
- US-A1- 2010 104 927
- US-A1- 2011 135 977
- US-A1- 2012 040 221

## Description

### Domaine technique

La présente invention concerne le domaine des accumulateurs électrochimiques, et plus particulièrement à des accumulateurs métal-ion.

Plus particulièrement, l'invention a trait à un module de batterie, à empilement d'accumulateurs à emballage souple.

L'invention vise en premier lieu à accumulateurs.

Bien que décrite en référence à un accumulateur Lithium-ion, l'invention s'applique à tout accumulateur électrochimique métal-ion, c'est-à-dire également Sodium-ion, Magnésium-ion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

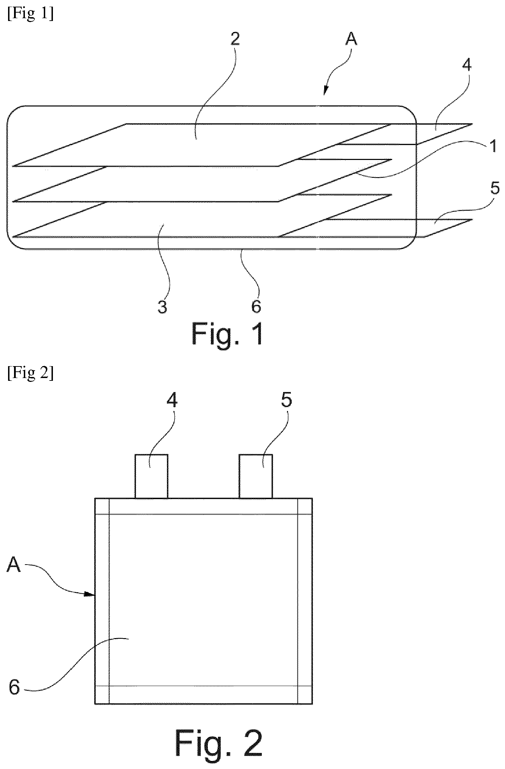

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

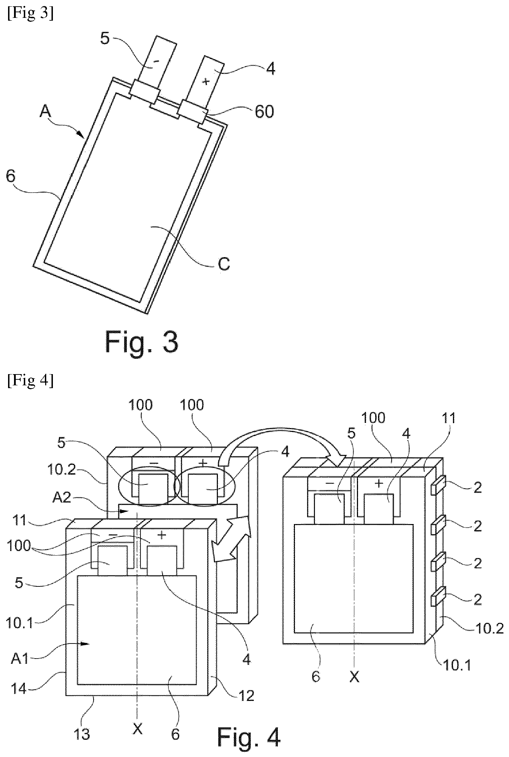

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple.

Un accumulateur souple, communément appelé en anglais « *Thin Film Battery*», est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Dans le développement et la fabrication des batteries lithium-ion, chaque profil/nouvelle demande, quels que soient les acteurs du marché, nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Il est connu, notamment pour augmenter les densités d'énergie, de réaliser des pack-batterie par empilement d'accumulateurs à emballage souple, les bornes de sortie des électrodes (languettes ou « tabs ») étant reliées électriquement en série ou en parallèle les unes avec les autres.

Par ailleurs, les accumulateurs doivent parfois être mis en compression mécanique, afin de maximiser leur durée de vie.

En effet, il est également connu qu'une bonne maitrise d'une force de compression appliquée aux cellules électrochimiques apporte un gain en durée de vie des cellules et du pack-batterie afférent.

Il est également connu qu'il existe une force de compression optimale pour les cellules permettant de maximiser leur durée de vie. Si la force de compression est réduite de 50% par rapport à la force de compression optimale, on constate généralement une hausse du vieillissement de l'ordre également de 50%.

De fait, une compression appliquée sur la plus grande surface active d'une cellule électrochimique limite la délamination de ses couches internes (électrodes, séparateur, couches actives) et donc permet un gain significatif de performances en durée de vie et en fonctionnement nominal.

Selon la forme des accumulateurs, la compression à appliquer revêt plus ou moins d'importance. Dans le cas d'accumulateur à géométrie prismatique avec un emballage souple, il s'avère que la compression peut être primordiale.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Usuellement, la compression est appliquée au moyen de tirants mécaniques qui sont agencés autour des différents accumulateurs empilés par groupe. Le couple de serrage appliqué aux tirants détermine la force de compression appliquée sur les cellules.

Un inconvénient majeur des tirants mécaniques est qu'il est très difficile de maîtriser la force de compression au cours du fonctionnement des accumulateurs du pack-batterie, ainsi qu'au cours de leur vieillissement. En effet, lors de la charge et de la décharge des accumulateurs, et lors de leur vieillissement, ceux-ci ont tendance à subir des variations de volume par gonflement/dégonflement des cellules.

Ce phénomène de gonflement des cellules s'accentue avec leur vieillissement, ce qui entraîne une forte hausse de la force de compression à appliquer. De fait, cela dégrade la durée de vie des cellules et induit un surdimensionnement mécanique et de matière active. Ainsi, de manière générale, usuellement, pour compenser cette dégradation prévisible, les fabricants conçoivent un pack-batterie surdimensionné pour assurer une performance déterminée en fin de vie. Par exemple, pour une performance en fin de vie d'un pack à 10Ah, typiquement au bout de 10ans, les concepteurs dimensionnent initialement un pack-batterie de 12Ah. Autrement dit, ils prévoient une marge de l'ordre de 20% pour compenser le vieillissement des cellules.

Une autre difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même

Cette difficulté est d'autant plus accrue que les bornes se présentent sous la forme de languettes flexibles, d'un feuillard métallique de très faible épaisseur, typiquement de 0,2 à 0,4mm.

Généralement, les languettes d'électrode sont connectées les unes aux autres à l'aide de fils, de plaques ou de busbars par soudage. Pour cette raison, les languettes d'électrode sont partiellement pliées, et les plaques ou les busbars sont connectées aux parties pliées des autres languettes d'électrode par soudage, ce qui peut être complexe.

De plus, les pièces connectées peuvent se séparer les unes des autres en raison d'impacts externes, ce qui peut entraîner une augmentation du nombre de produits défectueux.

Enfin, cet assemblage par soudage supprime toute possibilité de remplacer un accumulateur défectueux par un autre au sein de l'empilement ou alors au prix d'un coût déraisonnable. Plusieurs solutions sont décrites dans la littérature pour réaliser des modules de batterie à empilement d'accumulateurs à emballage souple avec liaisons électriques entre leurs bornes ou pôles.

Le brevet US9023504B1 décrit un module de batterie avec des espaceurs agencés individuellement entre deux accumulateurs adjacents, chaque espaceur comprenant une partie de base en contact surfacique avec l'emballage souple d'un accumulateur, une partie d'aile faisant saillie de la partie de base venant recouvrir au moins partiellement les bords longitudinaux de deux accumulateurs adjacents et enfin une partie de fixation destinée à coupler mécaniquement l'espaceur à un espaceur adjacent. Un tel module présente de nombreux inconvénients. Tout d'abord, tel que dimensionné et agencé, chacun des espaceurs ne protège véritablement un accumulateur que sur une partie de son épaisseur. De plus, compte tenu de la forme de ces espaceurs, il n'y a pas de protection de la partie haute ni de la tranche en partie basse de l'accumulateur. Cela peut être très préjudiciable, sachant qu'en général, l'emballage souple d'un accumulateur est de faible épaisseur, le plus souvent inférieur à 0,2mm. D'autre part, ce brevet US9023504B1 ne prend pas en considération la liaison électrique à prévoir au niveau des languettes (bornes) de l'accumulateur. Ainsi, il n'y a ni mise en position, ni mise en pression des languettes pouvant permettre un mode de connexion électrique favorable des accumulateurs entre eux pour réaliser un assemblage en modules de batterie.

Le brevet EP1834365B1 divulgue un module de batterie à empilement d'accumulateurs à emballage souple, dont les bornes (languettes) sont mises en contact et reliées électriquement entre elles au moyen de boulons qui les traversent. Un tel module présente également de nombreux inconvénients. Il est tout d'abord nécessaire de réaliser au préalable un perçage de chacune des languettes, avec probablement un minimum de précision, ce qui n'est pas aisé compte-tenu de leur épaisseur. En outre, le contact électrique entre languettes est proportionnel à l'effort procuré par le couple de serrage d'un boulon. Ce couple est à doser précisément pour ne pas déformer chacune des plaques de fermeture en face avant et face arrière du module. Enfin, l'effort de mise en compression des languettes par ce serrage de boulons est localisé principalement dans la partie haute du module, i.e. dans la zone des connexions électriques entre languettes.

Le brevet CN105226320B décrit un module de batterie à empilement dans lequel chaque accumulateur est logé dans un support avec ses bornes (languettes) assemblées par soudage à des plots portés par le support. Les inconvénients d'un tel module sont également nombreux. A l'assemblage du module, c'est-à-dire des différents supports d'accumulateurs entre eux, on constate qu'il n'y a pas de mise en compression localisée au niveau des connexions électriques Il y a un montage avec mise en compression des différents étages constitués chacun par un support avec son accumulateur, par l'insertion de longues tiges filetées au travers de fixations de chaque support, chaque fixation étant espacée d'une pièce formant entretoise pour maintenir une épaisseur constante après serrage du module. Cet assemblage nécessite un grand nombre de référence de pièces le plus souvent métalliques qui augmentent considérablement la masse totale du module, et donc nuisent à la densité massique du module.

US2011/135977 divulgue un module de batterie de type Li-ion, comprenant une pluralité de cadres isolants électriques empilés les uns sur les autres et dans chacun desquels une cellule électrochimique de format prismatique est logée, l'assemblage mécanique et électrique entre cadres et connexions électriques d'un même module étant réalisé par des plaques de fixation, des goupilles de positionnement et de centrage logées dans des trous de positionnement et de centrage agencés chacun à un bord d'un cadre et un boitier global qui assure également la mise en connexion électrique en série ou en parallèle.

US2012/040221 décrit une batterie à empilement de cadres sans moyens d'assemblage des cadres entre eux.

DE102010055609 divulgue un empilement de cellules électrochimiques de type pouch logées dans des cadres supports évidés, avec les languettes de sortie en appui contre des joints et des cosses de connexion en U, montées chacune sur un bord latéral d'un cadre.. US2010/104927 divulgue un pack-batterie avec des espaceurs sous la forme de cadres pleins, l'assemblage mécanique entre espaceurs étant réalisé au moyen de tirants traversant des pattes de fixation réparties au coin de chaque cadre.

FR2973948 décrit uniquement un assemblage d'une cellule de type pouch entre deux cadres évidés.

WO2012/120091 divulgue un assemblage de cadres-supports logeant chacun une cellule électrochimique par emboitement de formes trapézoïdales complémentaires prévues sur les bords longitudinaux des cadres.

Il existe ainsi un besoin d'améliorer les modules de batterie à empilement d'accumulateurs à emballage souple, notamment afin de pallier les inconvénients précités.

Le but de l'invention est de répondre au moins en partie à ce besoin.

### Exposé de l'invention

Pour ce faire, l'invention concerne, sous l'un de ses aspects, un module de batterie comprenant :
- une pluralité d'accumulateurs, en particulier de géométrie prismatique, comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie de deux languettes formant les pôles ou bornes qui s'étendent dans le plan de la cellule électrochimique;
- une pluralité de cadres borgnes, allongés selon une direction longitudinale, chaque cadre borgne formant un support avec logement d'un de la pluralité d'accumulateurs, les supports étant empilés les uns sur les autres selon une direction d'empilement orthogonale à la direction, chaque support comprenant, sur au moins un de ses bords longitudinaux et/ou latéraux, des moyens de fixation par clipsage ou encliquetage avec au moins un support adjacent ;
- une pluralité de paires de pattes métalliques, chaque paire de pattes étant maintenue en épousant la forme d'un des bords latéraux et/ou longitudinaux d'un des supports pour former une paire de cosses, une portion de chaque cosse étant en contact avec pression contre un pôle ou borne d'un des accumulateurs tandis qu'une autre portion de chaque cosse est en contact avec pression contre une portion de cosse adjacente au sein de l'empilement.

Selon une configuration, le module peut comprendre au moins un busbar de liaison électrique soudé à la portion apparente de l'ensemble des cosses d'une même polarité.

Avantageusement, chaque support forme avec les moyens de fixation par clipsage ou encliquetage une seule pièce monolithique en matériau isolant électrique, de préférence en matière plastique. Un support intégrant les moyens de clipsage qui est réalisé en matériau plastique a pour avantages la légèreté et la garantie d'une isolation électrique fiable. Cette pièce monolithique peut être obtenue par injection plastique ou par impression 3D.

De préférence, les supports sont empilés en étant emboités au moins partiellement les uns dans les autres. Cela permet un positionnement précis et un maintien mécanique accru. Plusieurs modes de réalisation avantageux peuvent être envisagés pour les moyens de fixation par clipsage ou encliquetage comprenant, pour chaque support.

Selon un premier mode, les moyens comprennent :
- au moins une lame élastiquement déformable par flexion, agencée sur au moins un des bords longitudinaux et/ou latéraux de chaque support en s'étendant parallèlement à celui-ci, l'extrémité de la lame étant conformée en crochet d'encliquetage orienté vers l'extérieur du support;
- au moins un œillet d'encliquetage agencé en saillie sur au moins un des bords longitudinaux et/ou latéraux de chaque support de telle sorte que, par déformation élastique d'une lame d'un support adjacent, son crochet d'encliquetage vienne s'encliqueter dans ledit œillet d'encliquetage pour accrocher un support avec le support adjacent.

Selon un deuxième mode, les moyens comprennent :
- au moins une lame élastiquement déformable par flexion, agencée sur au moins un des bords longitudinaux et/ou latéraux de chaque support en s'étendant parallèlement à celui-ci, l'extrémité de la lame étant conformée en crochet d'encliquetage orienté vers l'extérieur du support;
- au moins une ouverture débouchante d'encliquetage, ménagée dans au moins un des bords longitudinaux et/ou latéraux de chaque support de telle sorte que, par déformation élastique d'une lame d'un support adjacent, son crochet d'encliquetage vienne s'encliqueter dans ladite ouverture d'encliquetage pour accrocher un support avec le support adjacent.

Selon un troisième mode, les moyens comprennent :
- au moins une partie mâle d'une boucle d'attache agencée sur au moins un des bords longitudinaux et/ou latéraux de chaque support en s'étendant parallèlement à celui-ci, la partie mâle étant formée d'une embase prolongée par une fourchette à au moins deux doigts d'encliquetage élastiquement déformables par flexion;
- au moins une partie femelle d'une boucle d'attache agencée sur au moins un des bords longitudinaux et/ou latéraux de chaque support en s'étendant parallèlement à celui-ci, la partie femelle étant formée d'une embase à deux ouvertures latérales d'encliquetage agencées de telle sorte que, par déformation élastique des doigts d'encliquetage d'un support adjacent, leurs extrémités viennent s'encliqueter dans lesdites ouvertures latérales pour accrocher un support avec le support adjacent.

Les différentes modes de fixation par clipsage peuvent être mis en œuvre seuls ou en association entre eux. Le choix de l'un et/ou l'autre des modes pourra être fait à souhait en fonction des contraintes des applications, notamment en fonction de la robustesse mécanique du type de fermeture par clipsage permettant de garantir une pression constante d'appui entre les languettes des accumulateurs et les cosses, mais également sur des critères d'encombrement, de masse et aussi de facilité à ouvrir la fermeture par clipsage en phase de démontage du module de batterie selon l'invention, pour en réaliser son recyclage par exemple.

Avantageusement, toutes les cosses sont identiques, et de préférence en aluminium. Proposer des cosses de même matériau, de même surface et de même forme, offre une interface externe commune pour standardiser la ou les liaisons électriques avec des busbars pour mise en série ou parallèle des cosses des supports du module de batterie selon l'invention.

L'aluminium constitue un matériau privilégié pour les cosses du module, pour les raisons suivantes :
- il présente une faible densité, typiquement une masse volumique de 2,7 g/cm³ plus faible que celle du cuivre ou du nickel, qui est 8,9 g/cm³. Cela permet un gain de masse significatif pour chaque sous-ensemble du module de batterie, constitué d'un support équipé de deux cosses ;
- il présente une très bonne conductivité électrique : à masse égale au cuivre, l'aluminium présente une conductivité électrique deux fois supérieure.
- il est facilement soudable par un procédé de soudage laser. On peut ainsi envisager d'utiliser des busbars en aluminium qui seront soudés en direct sur les cosses en aluminium du module selon l'invention en lieu et place des busbars selon l'état de l'art en cuivre, qui sont vissés sur des bornes terminales.

Avantageusement encore, chaque cosse a une épaisseur comprise entre 0,3 et 0,8mm.

Selon un mode de réalisation avantageux, chaque cosse est configurée pour absorber les déplacements induits par l'encliquetage entre supports adjacents, de sorte à garantir une pression de contact de la portion de chaque cosse contre un pôle ou borne d'un des accumulateurs et de l'autre portion de chaque cosse contre une portion de cosse adjacente et par là garantir le contact électrique permanent entre les bornes ou pôles et les cosses terminales dans l'empilement.

Selon ce mode, et une première variante, la portion de chaque cosse en contact avec un pôle ou borne d'un des accumulateurs a une surface texturée et/ou ondulée. De préférence, la surface texturée comprend des picots percés et/ou des striures. Le choix de surfaces texturées selon cette première variante est privilégié lorsque les cosses en aluminium présentent des épaisseurs élevées, par exemple de 0,5 à 0,8 mm. En effet, le volume matière étant important, il peut être intéressant de réaliser la texture en relief par des perçages sur des diamètres très fins, typiquement inférieurs à 1mm, avec déplacement de matière, ou par réalisation de striure de profondeur, typiquement de 0,1 à 0,25mm, dans les sens horizontal, vertical ou croisé à 45° par exemple.

Selon ce mode, et une deuxième variante, la portion de chaque cosse en contact avec un pôle ou borne d'un des accumulateurs est une surface emboutie et/ou pliée par rapport au reste de chaque cosse. Dans le cas de cosses de faible épaisseur, typiquement de 0,3 à 0,5 mm, les formes obtenues emboutissage ou pliage sont privilégiées. La forme ainsi conférée à une cosse lui apporte l'élasticité nécessaire pour absorber les déplacements liés à la fermeture des supports et permet de garantir une pression suffisante pour garantir le contact électrique permanent des languettes de connexion des accumulateurs sur la surface des cosses.

On peut prévoir que chaque borne ou pôle d'accumulateur soit insérée et en contact avec pression entre une portion de cosse et le support sur lequel elle est maintenue ou à l'inverser qu'elle soit insérée et en contact avec pression entre une portion de cosse et le support adjacent à celui sur lequel elle est maintenue.

Pour une application Li-ion, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

L'invention a encore pour objet un pack-batterie comprenant au moins deux modules de batterie tels que décrits précédemment, reliés électriquement entre eux au moyen d'au moins un busbar soudé sur au moins une partie des portions de cosses, à l'extérieur de l'empilement du module.

L'invention a enfin pour objet un procédé de réalisation d'un module de batterie tel que décrit précédemment, comprenant les étapes suivantes :
i/ mise en place de chaque paire de cosses sur un des bords latéraux et/ou latéraux de chaque support, de sorte à ce qu'elle soit maintenue par celui-ci ;
ii/ logement de chaque accumulateur dans un de la pluralité des supports ;
iii/ mise en contact avec pression de chaque borne ou pôle de chaque accumulateur contre une portion de chaque cosse maintenue sur le bord latéral et/ou longitudinal du support dans lequel ledit accumulateur est logé ;
iv/ empilement avec encliquetage ou clipsage des supports entre eux.

Ainsi, l'invention consiste essentiellement à définir un module de batterie comprenant une pluralité de supports individuels empilés les uns sur les autres et dans chacun desquels est logé un accumulateur à emballage souple (« pouch »), chaque support portant des cosses qui viennent réaliser individuellement une liaison électrique par contact avec pression avec une borne (languette) d'un des accumulateurs.

Afin d'obtenir cette connexion électrique par contact, l'assemblage des supports individuels entre eux est de les tenir mécaniquement par des moyens de clipsage/encliquetage positionnés sur les bords longitudinaux de chaque support individuel, ce qui permet d'obtenir une liaison mécanique robuste. Ainsi, chaque support individuel intègre par définition la fonction de fixation par serrage pour se raccorder à un autre support individuel.

Pour améliorer encore la robustesse de l'assemblage, on prévoit de préférence d'imbriquer les supports les uns dans les autres.

Au final, l'invention apporte de nombreux avantages parmi lesquels on peut citer:
- des liaisons électriques en sortie d'accumulateurs qui sont obtenues par contact avec pression et ne sont donc pas une liaison vissée, ou soudée comme selon l'état de l'art avec leurs inconvénients afférents comme suit ;
- une simplification de design d'un module de batterie comparativement à ceux selon l'état de l'art, avec un nombre de pièces limité. En particulier, il n'est pas besoin de rajouter des pièces de fixation, comme des tiges filetées, vis, écrou, plaque de serrage...
- la suppression d'une étape de process de soudage, par voie électrique ou soudage aux ultrasons, nécessaire dans les solutions selon l'état de l'art ;
- la possibilité d'utiliser une nature de matériau différente pour la cosse de sortie ou terminal de chaque support, par rapport à celle des languettes d'accumulateurs. L'avantage qui en découle est de standardiser toutes les cosses mises en œuvre pour le module de batterie. Cette standardisation permet notamment de souder les deux cosses en aluminium par support à un busbar suivant un même procédé d'assemblage.
- un impact favorable sur la densité d'énergie massique d'un module de batterie : le gain de masse réalisé sur l'ensemble des pièces métalliques de fixation, habituellement utilisées dans les solutions de l'état de l'art, va permettre d'améliorer la densité d'énergie massique (Wh/kg) d'une batterie ;
- du fait des liaisons électriques sans soudure entre cosses de chaque support et languettes de l'accumulateur qu'il loge, il devient plus facile de récupérer chaque accumulateur dans le cas d'une étape de démontage d'un module de batterie, pour un remplacement en cas de défectuosité ou pour le recyclage.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en en perspective d'une partie d'un module de batterie selon l'invention, avant assemblage et après assemblage entre deux cadres borgnes formant des supports dans lesquels sont logés individuellement des accumulateurs.
[Fig 5] la figure 5 est une vue de côté montrant l'empilement et l'assemblage d'une pluralité de supports avec les accumulateurs logés pour la réalisation d'un module de batterie selon l'invention.
[Fig 6] la figure 6 est une vue en perspective d'une première variante de réalisation de patte formant une cosse de connexion avec une languette d'accumulateur, qui est destinée à être portée par un support de module de batterie selon l'invention.
[Fig 7] la figure 7 est une vue en perspective partielle d'une cosse selon la figure 6, portée par un support et en contact avec une languette d'accumulateur au sein d'un module de batterie selon l'invention.
[Fig 8] la figure 8 est une vue en perspective d'une étape du procédé d'assemblage d'un module de batterie selon l'invention au cours de laquelle les cosses selon les figures 6 et 7, portées par les supports sont chacune mises en contact avec pression avec une languette d'accumulateur.
[Fig 9] la figure 9 est une vue en perspective partielle montrant les différentes cosses en contact au sein d'un module de batterie selon l'invention à plusieurs supports individuels assemblés entre eux.
[Fig 10A] la figure 10A est une vue de détail montrant un premier mode de réalisation des moyens de fixation par clipsage de supports adjacents entre eux, les moyens étant ménagés sur un bord longitudinal d'un support.
[Fig 10B] la figure 10B est une vue en perspective montrant l'assemblage avec clipsage en cours par les moyens selon la figure 10A, entre deux supports adjacents.
[Fig 10C] la figure 10C est une vue en perspective montrant l'assemblage avec clipsage effectivement réalisé par les moyens selon la figure 10A, entre plusieurs supports adjacents.
[Fig 11] la figure 11 est une vue en perspective d'une deuxième variante de réalisation d'une cosse de connexion avec une languette d'accumulateur, qui est destinée à être portée par un support de module de batterie selon l'invention.
[Fig 12] la figure 12 est une vue partielle de côté d'une cosse selon la figure 11, portée par un support et en contact avec une languette d'accumulateur au sein d'un module de batterie selon l'invention
[Fig 13] la figure 13 est une vue en perspective partielle d'une cosse selon la figure 11, portée par un support et en contact avec une languette d'accumulateur au sein d'un module de batterie selon l'invention.
[Fig 14] la figure 14 est une vue en perspective d'une étape du procédé d'assemblage d'un module de batterie selon l'invention au cours de laquelle les cosses selon les figures 11 à 13, portées par les supports sont chacune mises en contact avec pression avec une languette d'accumulateur.
[Fig 15] est une vue en perspective d'une troisième variante de réalisation de patte formant une cosse de connexion avec une languette d'accumulateur, qui est destinée à être portée par un support de module de batterie selon l'invention.
[Fig 16] la figure 16 est une vue en perspective partielle d'une cosse selon la figure 15, portée par un support et en contact avec une languette d'accumulateur au sein d'un module de batterie selon l'invention.
[Fig 17] la figure 17 est une vue en perspective d'une étape du procédé d'assemblage d'un module de batterie selon l'invention au cours de laquelle les cosses selon les figures 15 et 16, portées par les supports sont chacune mises en contact avec pression avec une languette d'accumulateur.
[Fig 18] est une vue en perspective d'une quatrième variante de réalisation de patte formant une cosse de connexion avec une languette d'accumulateur, qui est destinée à être portée par un support de module de batterie selon l'invention.
[Fig 19] la figure 19 est une vue en perspective partielle d'une cosse selon la figure 18, portée par un support et en contact avec une languette d'accumulateur au sein d'un module de batterie selon l'invention.
[Fig 20] la figure 20 est une vue en perspective d'une étape du procédé d'assemblage d'un module de batterie selon l'invention au cours de laquelle les cosses selon les figures 18 et 19, portées par les supports sont chacune mises en contact avec pression avec une languette d'accumulateur.
[Fig 21] la figure 21 est une vue en perspective montrant un support selon l'invention avec des moyens de clipsage selon un deuxième mode de réalisation.
[Fig 21A] la figure 21A est une vue de détail de la figure 21.
[Fig 21B] la figure 21B est une vue de détail de la figure 21.
[Fig 21C] la figure 21C est une vue en perspective montrant le clipsage entre plusieurs supports grâce aux moyens de clipsage selon la figure 21.
[Fig 22] la figure 22 est une vue en perspective montrant un support selon l'invention avec des moyens de clipsage selon une variante de la figure 21.
[Fig 22A] la figure 22A est une vue de détail de la figure 22.
[Fig 22B] la figure 22B est une vue de détail de la figure 22.
[Fig 22C] la figure 22C est une vue en perspective montrant le clipsage entre plusieurs supports grâce aux moyens de clipsage selon la figure 22.
[Fig 23] la figure 23 est une vue en perspective montrant un support selon l'invention avec des moyens de clipsage selon un troisième mode de réalisation.
[Fig 23A] la figure 23A est une vue de détail de la figure 23.
[Fig 23B] la figure 23B est une vue de détail de la figure 23.
[Fig 23C] la figure 23C est une vue en perspective montrant le clipsage entre plusieurs supports grâce aux moyens de clipsage selon la figure 23.

### Description détaillée

Les figures 1 à 3 sont relatives à des exemples différents d'accumulateur Li-ion, d'emballages souples selon l'état de l'art. Ces figures 1 à 3 ont déjà été commentées en préambule et ne le sont donc pas plus ci-après.

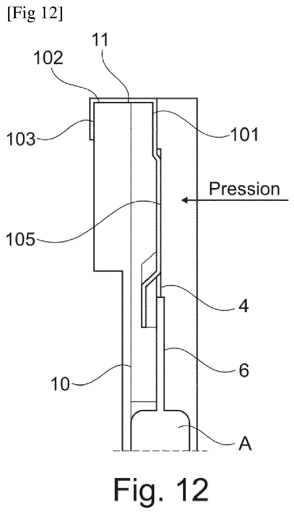

Par souci de clarté, les mêmes références désignant les mêmes éléments selon l'état de l'art et selon l'invention sont utilisées pour toutes les figures 1 à 23C.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à la verticale.

De même, les termes « longitudinaux » et « latéraux » sont à considérer par rapport à la direction longitudinale X selon laquelle un support d'accumulateur conforme à l'invention est allongé.

Dans les exemples illustrés ci-après, les accumulateurs A1 à AN+1 illustrés sont de format prismatique, à emballage souple 6, usuellement appelés « pouch ».

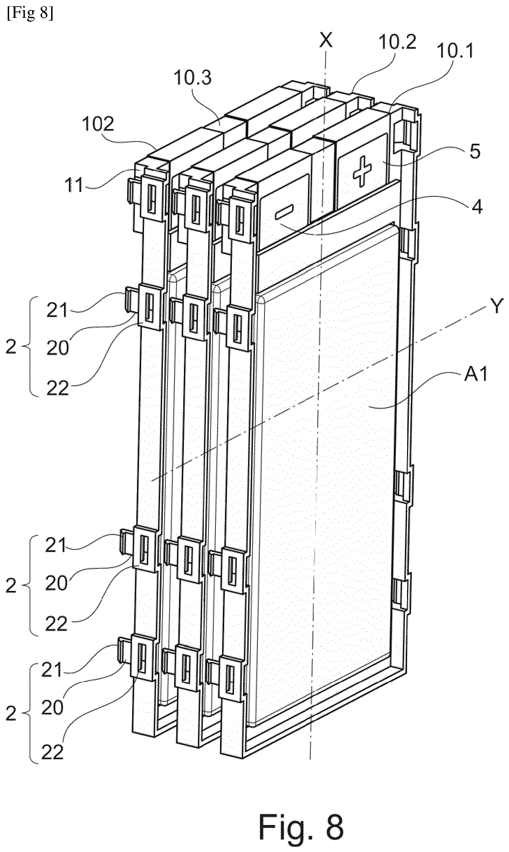

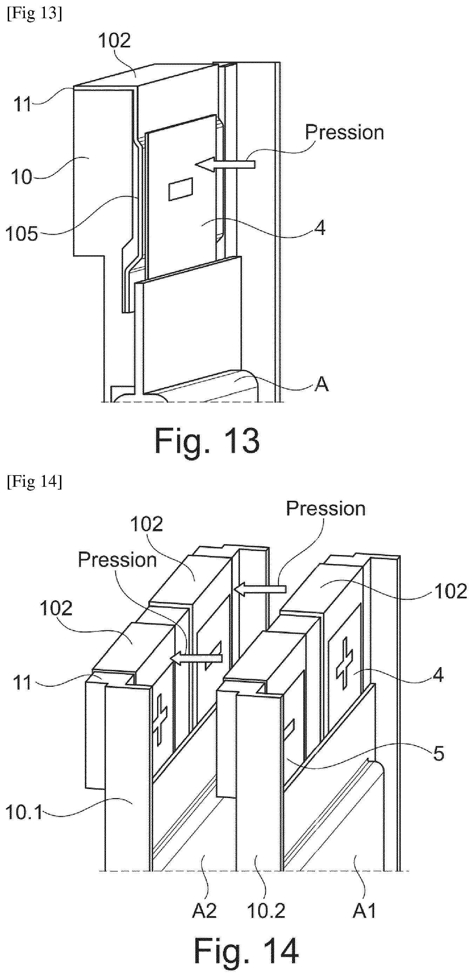

Les accumulateurs A1 à AN+1 peuvent être reliés électriquement en série et/ou en parallèle dans un module selon l'invention. Le montage en série et/ou en parallèle électrique est fonction de l'orientation des accumulateurs. En figure 8, un exemple de montage en parallèle électrique est montré tandis qu'en figure 14, il s'agit d'un montage en série.

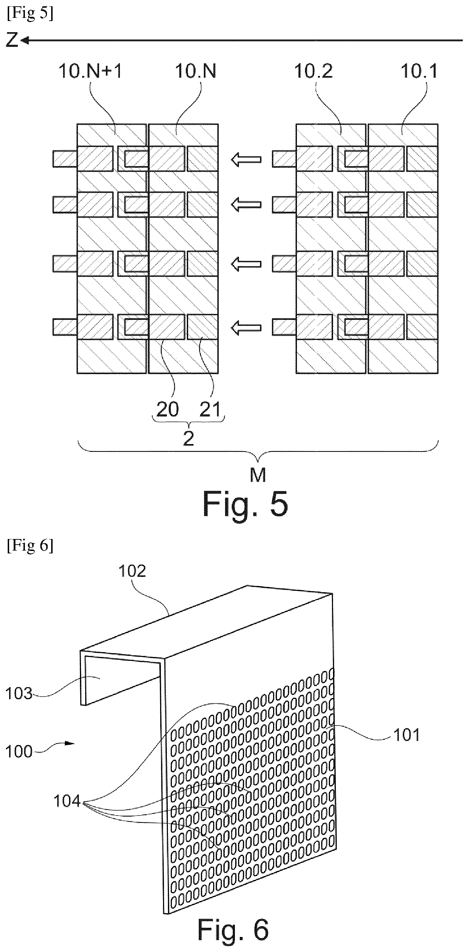

On a représenté en figures 4 et 5, un exemple d'une partie de module de batterie M selon l'invention comprenant plusieurs accumulateurs adjacents A1, A2, ..AN, AN+1.

Chaque accumulateur A1, A2 ..AN, AN+1 est logé dans un cadre borgne 10.1, 10.2, ..10N, 10N+1 allongé selon une direction longitudinale (X), qui forme ainsi un support de l'accumulateur.

Chacun des supports 10.1, 10.2 , ..10N, 10N+1 est de forme générale parallélépipédique rectangle avec deux bords latéraux 11, 13 reliés entre eux par deux bords longitudinaux 12, 14 parallèle à la direction longitudinale (X).

Les supports 10.1, 10.2 , ..10N, 10N+1 sont empilés les uns sur les autres, de préférence en étant emboités au moins partiellement les uns dans les autres, selon une direction d'empilement (Z) orthogonale à la direction (X).

Chacun des supports 10.1, 10.2 , ..10N, 10N+1 est fixé au(x) support(s) adjacent(s) par des moyens de clipsage/encliquetage 2, agencés sur au moins un des bords longitudinaux 12, 14 de chaque support. Ces moyens de clipsage/encliquetage 2 permettent d'obtenir des liaisons mécaniques robustes entre les différents supports empilés. De manière alternative ou complémentaire, on peut envisager que les moyens de clipsage/encliquetage 2 soient agencés sur au moins un des bords latéraux 11, 13 de chaque support.

Chacun des supports 10.1, 10.2 , ..10N, 10N+1 forme avec les moyens de clipsage 2 une seule pièce monolithique en matériau plastique isolant électrique. Un support peut par exemple être en polyétherimide (PEI) ou en acrylonitrile butadiène styrène (ABS).

Pour assurer les liaisons électriques entre les différents accumulateurs A1- AN+1 d'un même module de batterie M, chaque support 10.1, 10.2 , ..10N, 10N+1 supporte sur une paires de pattes métalliques 100 maintenue en épousant la forme d'un des bords latéraux 11 pour former une paire de cosses que l'on peut également désigner comme cosses terminales ou de sortie.

Dans l'empilement du module M, une portion de chaque cosse 100 est en contact avec pression contre un pôle ou borne 4, 5 d'un des accumulateurs A1 à AN+1. Une autre portion de chaque cosse 100 est en contact avec pression contre une portion de cosse adjacent. Ainsi, la continuité électrique est assurée entre tous les accumulateurs A1 à AN+1.

Avantageusement, toutes les cosses 100 sont identiques au sein d'un même module de batterie, c'est-à-dire de mêmes dimensions et réalisées dans le même matériau. De préférence, ces cosses sont en aluminium.

Un exemple de cosse 100, destiné à venir épouser un bord latéral 11 à angle droit, est montré en figure 6. Cette cosse 100 est réalisée par pliage à angle droit d'une patte en aluminium. Elle comprend deux portions parallèle 101, 103 reliées entre elles par une portion 102 qui, une fois le support qui supporte la cosse fixé avec un autre support adjacent, forme la surface de connexion apparente qui peut être soudée à un busbar.

La portion 101 destinée à venir à contact avec pression avec une languette 4 ou 5 d'un accumulateur, comprend des picots percés 104 sur des diamètres très fins, typiquement inférieurs à 1 mm. Ces picots 104 ont pour fonction de compenser l'effort nécessaire à appliquer pour réaliser la fermeture les moyens de clipsage 2 entre deux supports d'accumulateurs adjacents.

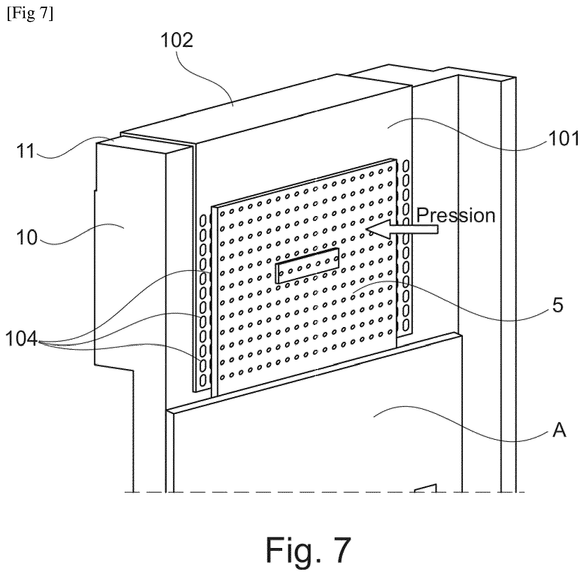

Comme montré en figures 7 et 8, avant l'assemblage par clipsage entre deux supports d'accumulateurs adjacents 10.1, 10.2, chaque languette 4 ou 5 d'accumulateur A1, A2 est appliquée avec pression contre la portion 101, 104 d'une cosse 100.

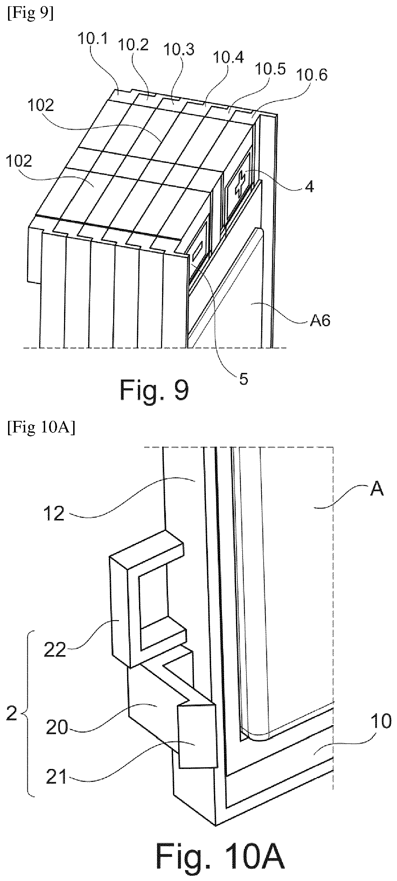

La figure 9 montre une partie de dessus d'une module de batterie en configuration assemblée clipsées des différents supports 10.1 à 10.6 entre eux, les portions 102 apparentes des cosses identiques étant alignées en deux rangées en formant des surfaces de connexion électrique avec des busbars notamment.

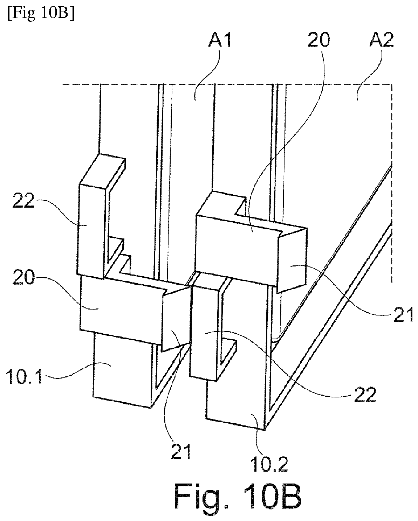

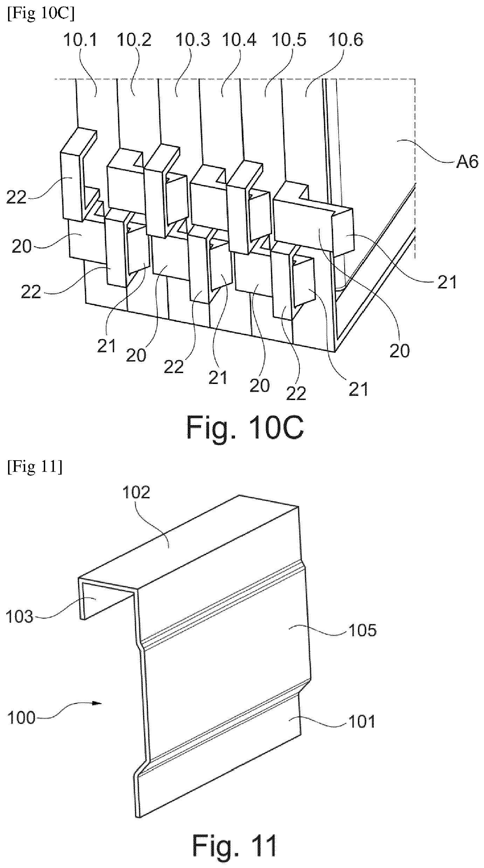

Les figures 10A à 10C montrent un mode de réalisation des moyens de clipsage 2 pour assembler entre eux les différents supports 10.1 à 10.6 d'accumulateurs A1 à A6 empilés d'un même module de batterie.

Selon ce mode, une lame 20 élastiquement déformable par flexion est agencée sur chacun des bords longitudinaux 12, 14 de chaque support 10.1 à 10.6 en s'étendant parallèlement à celui-ci. L'extrémité de la lame 20 est conformée en crochet d'encliquetage 21 orienté vers l'extérieur du support.

Un œillet d'encliquetage 22 est également agencé en saillie sur chacun des bords longitudinaux 12, 14 de chaque support 10.1 à 10.6. Ainsi, l'assemblage par clipsage entre deux supports adjacents est réalisé par déformation élastique de la lame 20 d'un support en venant l'insérer dans l'œillet d'encliquetage d'un support adjacent, jusqu'à ce que son crochet d'encliquetage 22 vienne s'encliqueter dans ledit œillet d'encliquetage 22.

Les figures 11 à 14 montrent une variante de réalisation d'une cosse 100 selon laquelle les picots 104 sont remplacés par une portion emboutie 105 en saillie vers l'extérieur de la portion 101.

Comme montré en figures 13 et 14, avant l'assemblage par clipsage entre deux supports d'accumulateurs adjacents 10.1, 10.2, chaque languette 4 ou 5 d'accumulateur A1, A2 est appliquée avec pression contre la portion 101, 105 d'une cosse 100. L'effort nécessaire appliquer pour réaliser la fermeture les moyens de clipsage 2 entre deux supports d'accumulateurs adjacents 10.1, 10.2 est ici compensé par la déformation de la portion emboutie 105 lors de la fermeture.

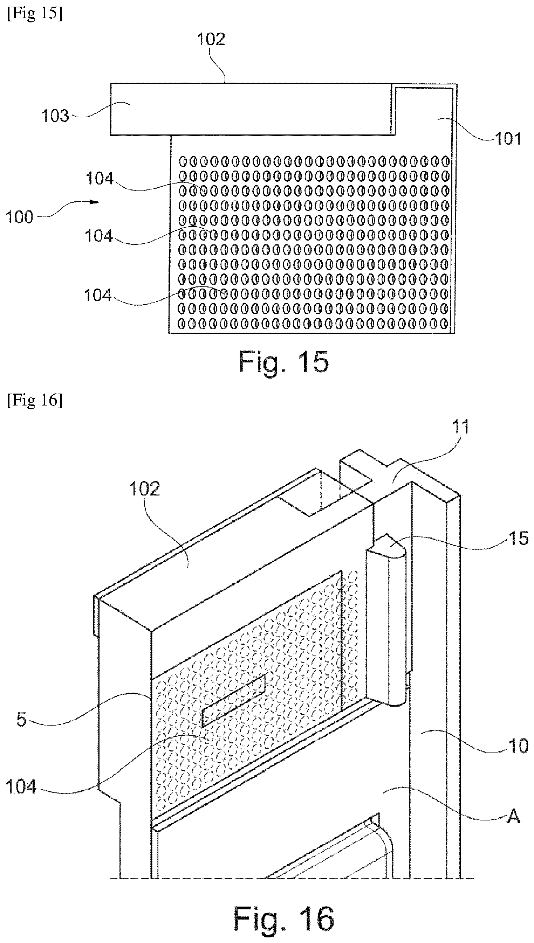

Les figures 15 à 17 montrent une variante de montage à celle des figures 7 et 8, réalisée avec les mêmes cosses 100 à picots. Dans cette variante, lors du montage, chaque languette 4 ou 5 est insérée entre la portion 101, 104 d'une cosse 100 et le support 10 d'accumulateur A qui supporte la cosse 100.

Comme montré en figure 16, pour réaliser un maintien automatique avec pression de contact entre la portion 101, 104 de cosse 100 et une languette 4 ou 5, on peut prévoir de réaliser des glissières 15 dans un support 10, de préférence venues de moulage avec ce dernier. Les bords latéraux de la portion 101 de la cosse 100 sont insérés dans les glissières 15, une fois la languette 4 ou 5 mise en place contre le support 10.

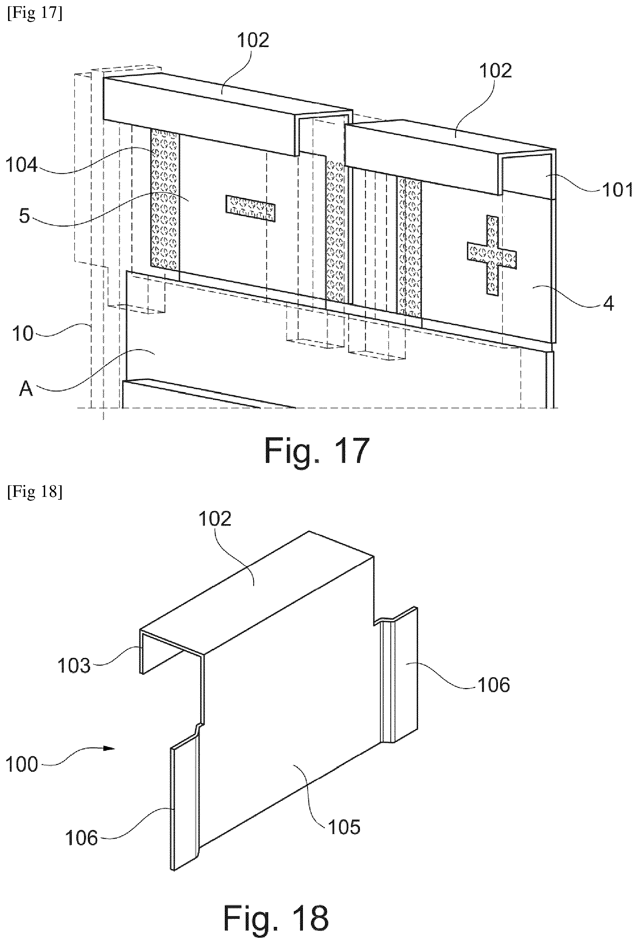

Les figures 18 à 20 montrent une alternative à la variante des figures 11 à 14 selon laquelle la portion emboutie 105 est inversée, i.e. orientée vers l'intérieur, en direction du support 10 qui supporte la cosse 100.

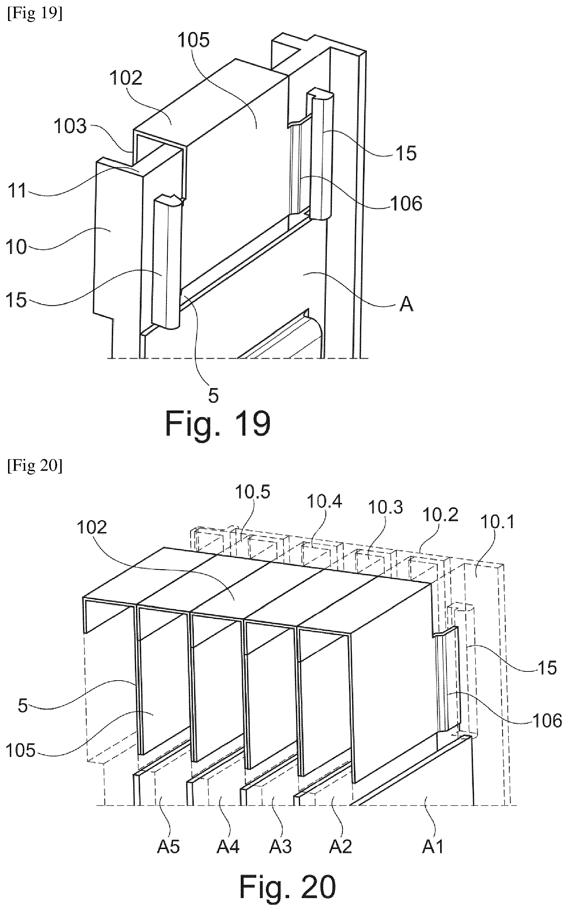

Comme montré en figure 19, pour réaliser un maintien automatique avec pression de contact entre la portion 101, 104 de cosse 100 et une languette 4 ou 5, on peut prévoir de réaliser des glissières 15 dans un support 10, de préférence venues de moulage avec ce dernier. Des portions latérales 106 de la cosse 100 sont insérées dans les glissières 15, une fois la languette 4 ou 5 mise en place contre le support 10.

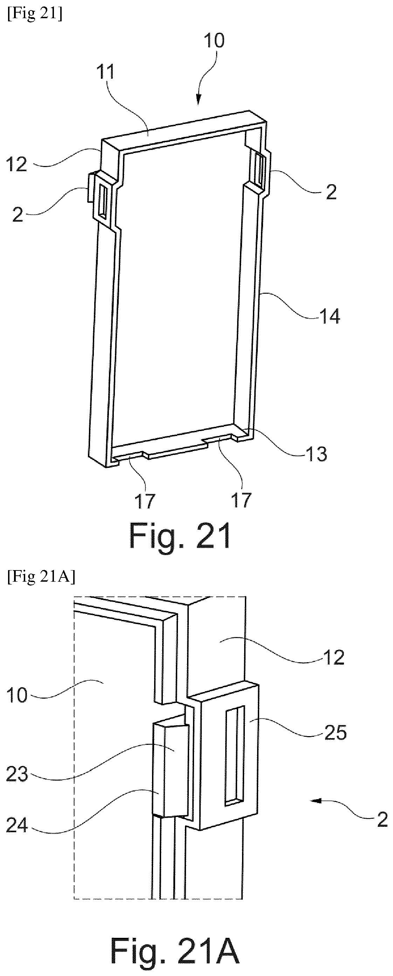

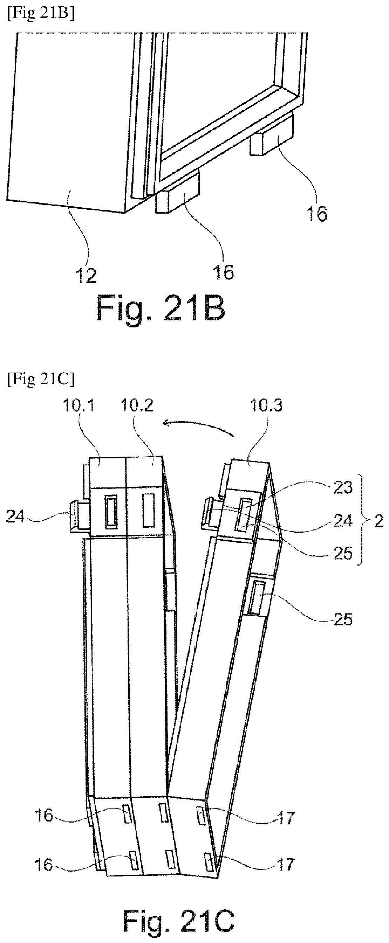

Les figures 21 à 21C montrent un autre mode de réalisation des moyens de clipsage 2 pour assembler entre eux les différents supports 10.1 à 10.3 d'accumulateurs empilés d'un même module de batterie.

Selon ce mode, une lame 23 élastiquement déformable par flexion, agencé en saillie sur chacun des bords longitudinaux 12, 14 de chaque support 10.1 à 10.3 en s'étendant parallèlement à celui-ci. L'extrémité de la lame 23 est conformée en crochet d'encliquetage 24 orienté vers l'extérieur du support 10.1, 10.2.

Une ouverture débouchante d'encliquetage 25 est ménagée dans chacun des bords longitudinaux 12, 14 de chaque support 10.1 à 10.6. Ainsi, l'assemblage par clipsage entre deux supports adjacents est réalisé par déformation élastique de la lame 23 d'un support en venant l'insérer dans l'ouverture d'encliquetage 25 d'un support adjacent, jusqu'à ce que son crochet d'encliquetage 24 vienne s'encliqueter dans ladite ouverture d'encliquetage 25.

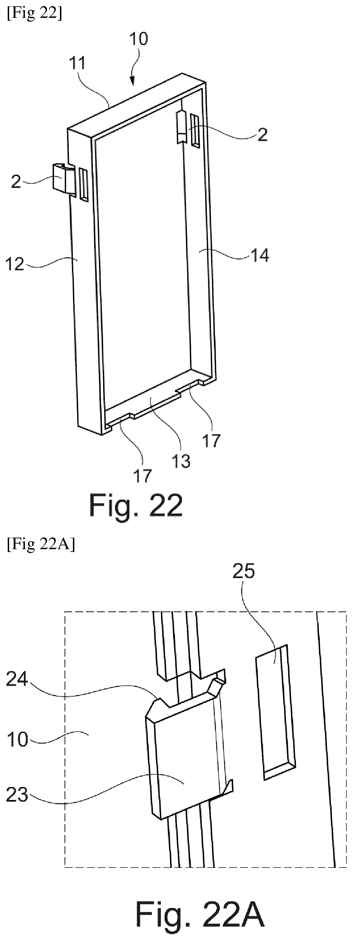

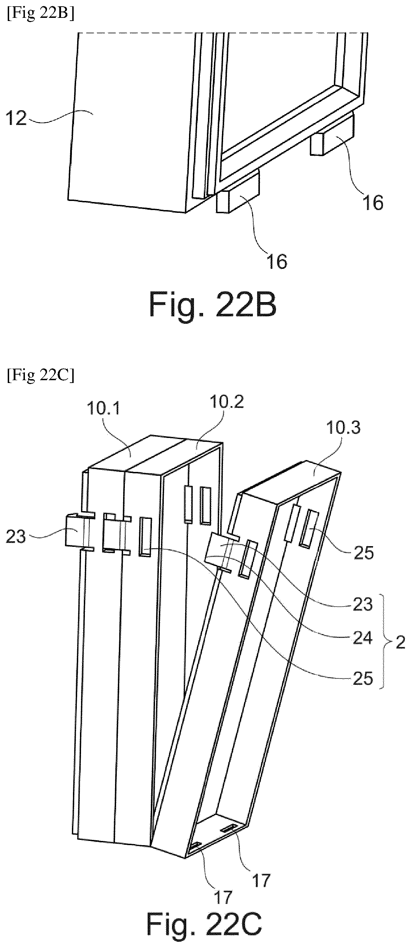

Les figures 22 à 22C montrent une variante de réalisation aux figures 21 à 21C. Selon cette variante, l'agencement de la lame 23 et l'assemblage par clipsage sont réalisés par l'extérieur du support tandis que dans le cas des figures 21 à 21C, cela a lieu par l'intérieur du support.

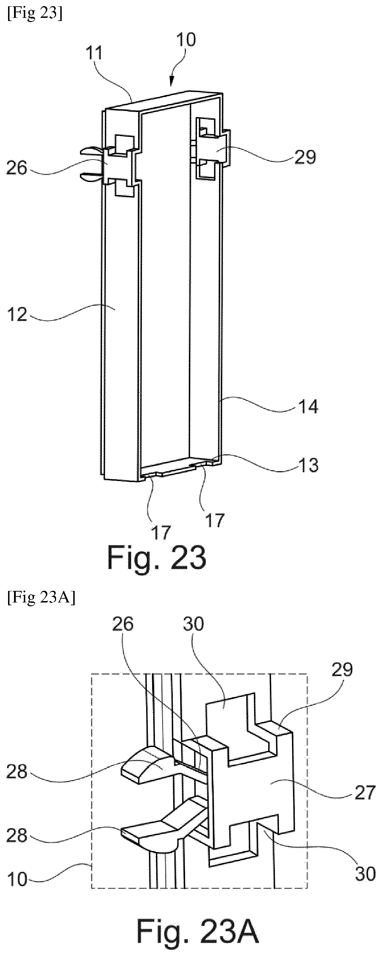

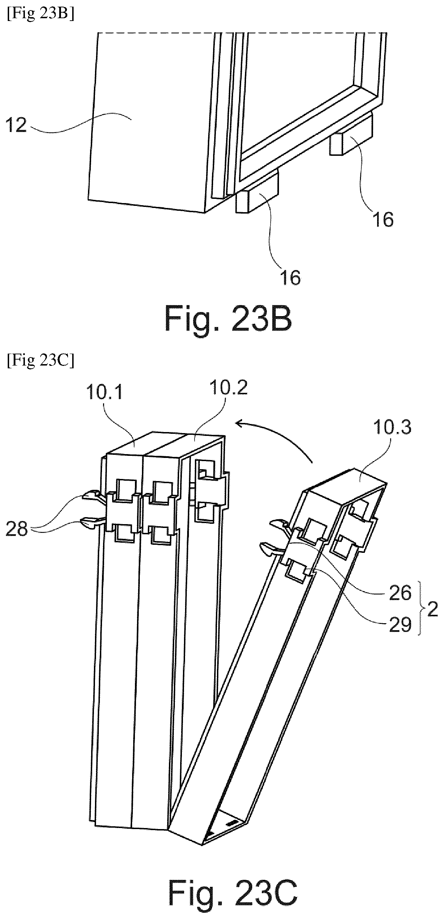

Les figures 23 à 23C montrent encore un autre mode de réalisation des moyens de clipsage 2 pour assembler entre eux les différents supports 10.1 à 10.3 d'accumulateurs empilés d'un même module de batterie.

Selon ce mode, une partie mâle 26 d'une boucle d'attache est agencée sur chacun des bords longitudinaux 12, 14 de chaque support 10.1 à 10.3 en s'étendant parallèlement à celui-ci. La partie mâle 26 est formée d'une embase 27 prolongée par une fourchette à deux doigts d'encliquetage 28 élastiquement déformables par flexion.

Une partie femelle 29 d'une boucle d'attache est également agencée sur chacun des bords longitudinaux 12, 14 de chaque support 10.1 à 10.3 en s'étendant parallèlement à celui-ci. La partie femelle 29 est formée d'une embase 27 à deux ouvertures latérales d'encliquetage 30.

Ainsi, l'assemblage par clipsage entre deux supports adjacents est réalisé par déformation élastique des doigts d'encliquetage 28 d'un support en venant les insérer individuellement dans les ouverture d'encliquetage 30 d'un support adjacent, jusqu'à ce que leurs extrémités d'encliquetage viennent s'encliqueter dans chaque ouverture d'encliquetage 30.

Comme illustré, l'embase 27 de la partie mâle 26 est avantageusement la même que celle de partie femelle 29.

Comme illustré également, pour l'assemblage entre les différents supports 10.1 à 10.6, avant la fixation par clipsage, on peut prévoir avantageusement, pour chaque support, des pattes 16 qui font saillie sur le bord latéral 13 opposé à celui qui supporte les cosses 100, et qui viennent s'insérer dans des ouvertures correspondantes 17 ménagées dans le bord latéral inférieur du support adjacent. Ainsi, ces pattes 16 facilitent non seulement le montage mais renforcent en outre la liaison mécanique entre les supports adjacents.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, les emballages souples des accumulateurs conformes à l'invention sont de format prismatique, l'invention s'applique bien entendu à tous les accumulateurs à emballage souple.

Un module de batterie M selon l'invention peut comprendre un nombre d'accumulateurs et de supports afférents empilés, qui est déterminé en fonction de chaque application.

## Revendications

1. Module de batterie (M) comprenant :
- une pluralité d'accumulateurs, en particulier de géométrie prismatique (A1, A2...AN+1) comprenant chacun au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie de deux languettes (4, 5), formant les pôles ou bornes qui s'étendent dans le plan de la cellule électrochimique;
- une pluralité de cadres borgnes (10.1, 10.2...10.N+1), allongés selon une direction longitudinale (X) et latérale (Y), chaque cadre borgne formant un support avec logement d'un de la pluralité d'accumulateurs, les supports étant empilés les uns sur les autres selon une direction d'empilement (Z) orthogonale aux directions (X,Y), chaque support comprenant, sur au moins un de ses bords longitudinaux (12,14) et/ou latéraux (11, 13), des moyens de fixation (2) par clipsage ou encliquetage avec au moins un support adjacent ;
- une pluralité de paires de pattes métalliques (100), chaque paire de pattes étant maintenue en épousant la forme d'un des bords latéraux (11, 13) et/ou longitudinaux (12, 14) d'un des supports pour former une paire de cosses, une portion (101) de chaque cosse étant en contact avec pression contre un pôle ou borne d'un des accumulateurs tandis qu'une autre portion (102) de chaque cosse est en contact avec pression contre une portion de cosse adjacente au sein de l'empilement.

2. Module de batterie (M) selon la revendication 1, comprenant au moins un busbar de liaison électrique, soudé à la portion apparente de l'ensemble des cosses d'une même polarité.

3. Module de batterie (M) selon la revendication 1 ou 2, chaque support formant avec les moyens de fixation (2) par clipsage ou encliquetage une seule pièce monolithique en matériau isolant électrique, de préférence en matière plastique.

4. Module de batterie (M) selon l'une des revendications 1 à 3, les supports étant empilés en étant emboités au moins partiellement les uns dans les autres.

5. Module de batterie (M) selon l'une des revendications précédentes, les moyens de fixation (2) par clipsage ou encliquetage comprenant, pour chaque support:
- au moins une lame (20) élastiquement déformable par flexion, agencée sur au moins un des bords longitudinaux (12, 14) et/ou latéraux (11, 13) de chaque support en s'étendant parallèlement à celui-ci, l'extrémité de la lame étant conformée en crochet d'encliquetage (21) orienté vers l'extérieur du support;
- au moins un œillet d'encliquetage (22) agencé en saillie sur au moins un des bords longitudinaux (12, 14) et/ou latéraux (11, 13) de chaque support de telle sorte que, par déformation élastique d'une lame d'un support adjacent, son crochet d'encliquetage vienne s'encliqueter dans ledit œillet d'encliquetage pour accrocher un support avec le support adjacent.

6. Module de batterie (M) selon l'une des revendications 1 à 4, les moyens de fixation (2) par clipsage ou encliquetage comprenant, pour chaque support:
- au moins une lame élastiquement déformable par flexion, agencée sur au moins un des bords longitudinaux (12, 14) et/ou latéraux (11, 13) de chaque support en s'étendant parallèlement à celui-ci, l'extrémité de la lame étant conformée en crochet d'encliquetage orienté vers l'extérieur du support;
- au moins une ouverture débouchante d'encliquetage, ménagée dans au moins un des bords longitudinaux (12, 14) et/ou latéraux (11, 13) de chaque support de telle sorte que, par déformation élastique d'une lame d'un support adjacent, son crochet d'encliquetage vienne s'encliqueter dans ladite ouverture d'encliquetage pour accrocher un support avec le support adjacent.

7. Module de batterie (M) selon l'une des revendications 1 à 4, les moyens de fixation (2) par clipsage ou encliquetage comprenant, pour chaque support:
- au moins une partie mâle (26) d'une boucle d'attache agencée sur au moins un des bords longitudinaux (12, 14) et/ou latéraux (11,13) de chaque support en s'étendant parallèlement à celui-ci, la partie mâle étant formée d'une embase (27) prolongée par une fourchette à au moins deux doigts d'encliquetage (28) élastiquement déformables par flexion;
- au moins une partie femelle (29) d'une boucle d'attache agencée sur au moins un des bords longitudinaux (12, 14) et/ou latéraux (11, 13) de chaque support en s'étendant parallèlement à celui-ci, la partie femelle étant formée d'une embase (27) à deux ouvertures latérales d'encliquetage (30) agencées de telle sorte que, par déformation élastique des doigts d'encliquetage d'un support adjacent, leurs extrémités viennent s'encliqueter dans lesdites ouvertures latérales pour accrocher un support avec le support adjacent.

8. Module de batterie (M) selon l'une des revendications précédentes, toutes les cosses étant identiques, de préférence en aluminium.

9. Module de batterie (M) selon l'une des revendications précédentes, chaque cosse étant configurée pour absorber les déplacements induits par l'encliquetage entre supports adjacents de sorte à garantir une pression de contact de la portion de chaque cosse contre un pôle ou borne d'un des accumulateurs et de l'autre portion de chaque cosse contre une portion de cosse adjacente et par là garantir le contact électrique permanent entre les bornes ou pôles et les cosses terminales dans l'empilement.

10. Module de batterie (M) selon la revendication 9, la portion de chaque cosse en contact avec un pôle ou borne d'un des accumulateurs ayant une surface texturée et/ou ondulée, la surface texturée comprenant de préférence des picots percés (104) et/ou des striures.

11. Module de batterie (M) selon la revendication 9, la portion de chaque cosse en contact avec un pôle ou borne d'un des accumulateurs étant une surface emboutie et/ou pliée par rapport au reste de chaque cosse.

12. Module de batterie (M) selon l'une des revendications précédentes, chaque borne ou pôle d'accumulateur étant insérée et en contact avec pression entre une portion de cosse et le support sur lequel elle est maintenue.

13. Module de batterie (M) selon l'une des revendications 1 à 12, chaque borne ou pôle d'accumulateur étant insérée et en contact avec pression entre une portion de cosse et le support adjacent à celui sur lequel elle est maintenue.

14. Pack-batterie comprenant au moins deux modules de batterie (M) selon l'une des revendications précédentes reliés électriquement entre eux au moyen d'au moins un busbar soudé sur au moins une partie des portions de cosses, à l'extérieur de l'empilement du module.

15. Procédé de réalisation d'un module de batterie (M) selon l'une des revendications 1 à 13, comprenant les étapes suivantes :
i/ mise en place de chaque paire de cosses sur un des bords latéraux et/ou longitudinaux de chaque support, de sorte à ce qu'elle soit maintenue par celui-ci ;
ii/ logement de chaque accumulateur dans un de la pluralité des supports ;
iii/ mise en contact avec pression de chaque borne ou pôle de chaque accumulateur contre une portion de chaque cosse maintenue sur le bord latéral et/ou longitudinal du support dans lequel ledit accumulateur est logé ;
iv/ empilement avec encliquetage ou clipsage des supports entre eux.

## Patentansprüche

1. Batteriemodul (M), das Folgendes aufweist:
- eine Vielzahl von Akkumulatoren, insbesondere mit prismatischer Geometrie (A1, A2...AN+1), die jeweils mindestens eine elektrochemische Zelle C, die aus einer Kathode (2), einer Anode (3) und einem zwischen der Kathode und der Anode angeordneten Elektrolyten gebildet ist, und eine flexible Verpackung (6) aufweisen, die so beschaffen ist, dass sie die elektrochemische Zelle dicht umschließt, während sie von einem Teil von zwei Zungen (4, 5) durchquert wird, die die Pole oder Klemmen bilden, die sich in der Ebene der elektrochemischen Zelle erstrecken;
- eine Vielzahl von Blindrahmen (10.1, 10.2...10.N+1), die sich in einer Längsrichtung (X) und einer Querrichtung (Y) erstrecken, wobei jeder Blindrahmen einen Träger mit Aufnahme für einen aus der Vielzahl der Akkumulatoren bildet, wobei die Träger in einer Stapelrichtung (Z) orthogonal zu den Richtungen (X, Y) gestapelt sind, wobei jeder Träger an mindestens einer seiner Längskanten (12, 14) und/oder Querkanten (11, 13) Mittel zur Befestigung (2) durch Einklipsen oder Einrasten mit mindestens einem benachbarten Träger aufweist;
- eine Vielzahl von Metalllaschenpaaren (100), wobei jedes Laschenpaar in der Form einer der Querkanten (11, 13) und/oder Längskanten (12, 14) eines der Träger gehalten wird, um ein Paar von Kabelschuhen zu bilden, wobei ein Abschnitt (101) jedes Kabelschuhs in Druckkontakt mit einem Pol oder einer Klemme einer der Akkumulatoren steht, während ein anderer Abschnitt (102) jedes Kabelschuhs in Druckkontakt mit einem benachbarten Kabelschuhabschnitt innerhalb des Stapels steht.

2. Batteriemodul (M) nach Anspruch 1, das mindestens eine elektrische Sammelschiene aufweist, die mit dem sichtbaren Abschnitt aller Kabelschuhe gleicher Polarität verlötet ist.

3. Batteriemodul (M) nach Anspruch 1 oder 2, wobei jeder Träger mit den Mitteln zur Befestigung (2) durch Einklipsen oder Einrasten ein einzelnes monolithisches Teil aus elektrisch isolierendem Material, vorzugsweise aus Kunststoff bildet.

4. Batteriemodul (M) nach einem der Ansprüche 1 bis 3, wobei die Träger zumindest teilweise ineinander gesteckt gestapelt sind.

5. Batteriemodul (M) nach einem der vorhergehenden Ansprüche, wobei die Mittel zur Befestigung (2) durch Einklipsen oder Einrasten für jeden Träger Folgendes aufweisen:
- mindestens eine durch Biegung elastisch verformbare Lamelle (20), die an mindestens einer der Längskanten (12, 14) und/oder Querkanten (11, 13) jedes Trägers angeordnet ist und sich parallel zu diesem erstreckt, wobei das Ende der Lamelle als nach außen gerichteter Rastbügel (21) ausgebildet ist;
- mindestens eine Rastöse (22), die an mindestens einer der Längskanten (12, 14) und/oder Querkanten (11, 13) jedes Trägers so angeordnet ist, dass durch elastische Verformung einer Lamelle eines benachbarten Trägers ihr Rastbügel in die Rastöse einrastet, um einen Träger mit dem benachbarten Träger zu verbinden.

6. Batteriemodul (M) nach einem der Ansprüche 1 bis 4, wobei die Mittel zur Befestigung (2) durch Einklipsen oder Einrasten für jeden Träger Folgendes aufweisen:
- mindestens eine durch Biegung elastisch verformbare Lamelle, die an mindestens einer der Längskanten (12, 14) und/oder Querkanten (11, 13) jedes Trägers angeordnet ist und sich parallel zu diesem erstreckt, wobei das Ende der Lamelle als nach außen gerichteter Rastbügel ausgebildet ist;
- mindestens eine durchgehende Rastöffnung, die an mindestens einer der Längskanten (12, 14) und/oder Querkanten (11, 13) jedes Trägers so ausgespart ist, dass durch elastische Verformung einer Lamelle eines benachbarten Trägers ihr Rastbügel in die Rastöffnung einrastet, um einen Träger mit dem benachbarten Träger zu verbinden.

7. Batteriemodul (M) nach einem der Ansprüche 1 bis 4, wobei die Mittel zur Befestigung (2) durch Einklipsen oder Einrasten für jeden Träger Folgendes aufweisen:
- mindestens einen männlichen Teil (26) einer Befestigungsschlaufe, die an mindestens einer der Längskanten (12, 14) und/oder Querkanten (11, 13) jedes Trägers angeordnet ist und sich parallel zu diesem erstreckt, wobei der männliche Teil aus einer Grundplatte (27) gebildet wird, die durch eine Gabel mit mindestens zwei durch Biegung elastisch verformbaren Rastfingern (28) verlängert ist;
- mindestens einen weiblichen Teil (29) einer Befestigungsschlaufe, die an mindestens einer der Längskanten (12, 14) und/oder Querkanten (11, 13) jedes Trägers angeordnet ist und sich parallel zu diesem erstreckt, wobei das weibliche Teil aus einer Grundplatte (27) mit zwei seitlichen Rastöffnungen (30) gebildet wird, die so angeordnet sind, dass durch elastische Verformung der Rastfinger eines benachbarten Trägers deren Enden in die seitlichen Öffnungen einrasten, um einen Träger mit dem benachbarten Träger zu verbinden.

8. Batteriemodul (M) nach einem der vorhergehenden Ansprüche, wobei alle Kabelschuhe identisch sind, vorzugsweise aus Aluminium.

9. Batteriemodul (M) nach einem der vorhergehenden Ansprüche, wobei jeder Kabelschuh so konfiguriert ist, dass er die durch Einrasten zwischen benachbarten Trägern induzierten Verschiebungen aufnimmt, so dass ein Kontaktdruck des Abschnitts jedes Kabelschuhs gegen einen Pol oder eine Klemme einer der Akkumulatoren und des anderen Abschnitts jedes Kabelschuhs gegen einen benachbarten Kabelschuhabschnitt gewährleistet ist und damit ein permanenter elektrischer Kontakt zwischen den Klemmen oder Polen und den Endkabelschuhen im Stapel gewährleistet ist.

10. Batteriemodul (M) nach Anspruch 9, wobei der Abschnitt jedes Kabelschuhs, der mit einem Pol oder einer Klemme einer der Akkumulatoren in Kontakt kommt, eine strukturierte und/oder wellige Oberfläche aufweist, wobei die strukturierte Oberfläche vorzugsweise gebohrte Spitzen (104) und/oder Streifen aufweist.

11. Batteriemodul (M) nach Anspruch 9, wobei der Abschnitt jedes Kabelschuhs, der mit einem Pol oder einer Klemme einer der Akkumulatoren in Kontakt kommt, eine im Vergleich zum Rest jeder Klemme tiefgezogene und/oder gebogene Fläche ist.

12. Batteriemodul (M) nach einem der vorhergehenden Ansprüche, wobei jede Klemme oder jeder Pol eines Akkumulators in Kontakt mit Druck zwischen einem Kabelschuhabschnitt und dem Träger eingesetzt ist, auf dem sie/er gehalten wird.

13. Batteriemodul (M) nach einem der Ansprüche 1 bis 12, wobei jede Klemme oder jeder Pol eines Akkumulators in Kontakt mit Druck zwischen einem Kabelschuhabschnitt und dem benachbarten Träger eingesetzt ist, auf dem sie/er gehalten wird.

14. Batteriepack mit mindestens zwei Batteriemodulen (M) nach einem der vorhergehenden Ansprüche, die mittels mindestens einer Sammelschiene elektrisch miteinander verbunden sind, die an mindestens einen Teil der Kabelschuhabschnitte außerhalb des Stapels des Moduls angelötet ist.

15. Verfahren zur Herstellung eines Batteriemoduls (M) nach einem der Ansprüche 1 bis 13, das die folgenden Schritte aufweist:
i/ Anbringen jedes Kabelschuhpaars an einer der Längskanten und/oder Querkanten jedes Trägers, sodass es von diesem gehalten wird;
ii/ Aufnehmen jedes Akkumulators in einen der Vielzahl von Trägern;
iii/ Herstellen eines Druckkontakts zwischen jeder Klemme oder jedem Pol jedes Akkumulators und einem Abschnitt jedes Kabelschuhs, der an der Längskante und/oder Querkante des Trägers gehalten wird, in der der Akkumulator untergebracht ist;
iv/ Stapeln mit Einrasten oder Einklipsen der Träger untereinander.

## Claims

1. Battery module (M) comprising:
- a plurality of accumulators, in particular of prismatic geometry (A1, A2...AN+1), each comprising at least one electrochemical cell C formed by a cathode (2), an anode (3) and an electrolyte interposed between the cathode and the anode, and a flexible package (6) arranged to contain the electrochemical cell in a sealed manner while having passing through it a portion of two tabs (4, 5) that form the poles or terminals which extend in the plane of the electrochemical cell;
- a plurality of blind frames (10.1, 10.2...10.N+1) that are elongate in a longitudinal direction (X) and lateral direction (Y), each blind frame forming a support with housing for one of the plurality of accumulators, the supports being stacked on one another in a stacking direction (Z) orthogonal to the directions (X, Y), each support comprising, on at least one of its longitudinal edges (12, 14) and/or lateral edges (11, 13), clipping or snap-fitting fastening means (2) for fastening with at least one adjacent support;
- a plurality of pairs of metal brackets (100), each pair of brackets being held conforming to the shape of one of the lateral edges (11, 13) and/or longitudinal edges (12, 14) of one of the supports to form a pair of lugs, one portion (101) of each lug being in pressing contact against a pole or terminal of one of the accumulators while another portion (102) of each lug is in pressing contact against an adjacent lug portion within the stack.

2. Battery module (M) according to Claim 1, comprising at least one electrical connection busbar welded to the visible portion of all the lugs of the same polarity.

3. Battery module (M) according to Claim 1 or 2, each support forming a single monolithic piece made of electrically insulating material, preferably plastic, with the clipping or snap-fitting fastening means (2).

4. Battery module (M) according to one of Claims 1 to 3, the supports being stacked by being fitted at least partially in one another.

5. Battery module (M) according to one of the preceding claims, the clipping or snap-fitting fastening means (2) comprising, for each support:
- at least one blade (20) that is elastically deformable by bending and arranged on at least one of the longitudinal edges (12, 14) and/or lateral edges (11, 13) of each support, extending parallel thereto, the end of the blade being shaped as a snap-fitting hook (21) oriented towards the outside of the support;
- at least one snap-fitting eye (22) projecting from at least one of the longitudinal edges (12, 14) and/or lateral edges (11, 13) of each support in such a way that, by elastic deformation of a blade of an adjacent support, its snap-fitting hook snap-fits into said snap-fitting eye to hook a support with the adjacent support.

6. Battery module (M) according to one of Claims 1 to 4, the clipping or snap-fitting fastening means (2) comprising, for each support:
- at least one blade that is elastically deformable by bending and arranged on at least one of the longitudinal edges (12, 14) and/or lateral edges (11, 13) of each support, extending parallel thereto, the end of the blade being shaped as a snap-fitting hook oriented towards the outside of the support;
- at least one snap-fitting open-ended opening formed in at least one of the longitudinal edges (12, 14) and/or lateral edges (11, 13) of each support in such a way that, by elastic deformation of a blade of an adjacent support, its snap-fitting hook snap-fits into said snap-fitting open-ended opening to hook a support with the adjacent support.

7. Battery module (M) according to one of Claims 1 to 4, the clipping or snap-fitting fastening means (2) comprising, for each support:
- at least one male part (26) of an attachment loop arranged on at least one of the longitudinal edges (12, 14) and/or lateral edges (11, 13) of each support, extending parallel thereto, the male part being formed of a base (27) extended by a fork with at least two snap-fitting fingers (28) that are elastically deformable by bending;
- at least one female part (29) of an attachment loop arranged on at least one of the longitudinal edges (12, 14) and/or lateral edges (11, 13) of each support, extending parallel thereto, the female part being formed of a base (27) with two lateral snap-fitting openings (30) arranged in such a way that, by elastic deformation of the snap-fitting fingers of an adjacent support, their ends snap-fit into said lateral openings to hook a support with the adjacent support.

8. Battery module (M) according to one of the preceding claims, all lugs being identical, preferably made of aluminium.

9. Battery module (M) according to one of the preceding claims, each lug being configured to absorb the displacements induced by the snap-fitting between adjacent supports so as to ensure a pressing contact of the portion of each lug against a pole or terminal of one of the accumulators and of the other portion of each lug against an adjacent lug portion and to thereby ensure permanent electrical contact between the terminals or poles and the terminal lugs in the stack.

10. Battery module (M) according to Claim 9, the portion of each lug in contact with a pole or terminal of one of the accumulators having a textured and/or corrugated surface, the textured surface preferably comprising pierced spikes (104) and/or striations.

11. Battery module (M) according to Claim 9, the portion of each lug in contact with a pole or terminal of one of the accumulators being a stamped and/or bent surface relative to the rest of each lug.

12. Battery module (M) according to one of the preceding claims, each accumulator terminal or pole being inserted, in pressing contact, between a lug portion and the support on which it is held.

13. Battery module (M) according to one of Claims 1 to 12, each accumulator terminal or pole being inserted, in pressing contact, between a lug portion and the support adjacent to the one on which it is held.

14. Battery pack comprising at least two battery modules (M) according to one of the preceding claims electrically connected to one another by means of at least one busbar welded to at least part of the lug portions, outside the stack of the module.

15. Method for manufacturing a battery module (M) according to one of Claims 1 to 13, comprising the following steps:
i/ placing each pair of lugs on one of the lateral edges and/or longitudinal edges of each support so that it is held thereby;
ii/ housing each accumulator in one of the plurality of supports;
iii/ bringing each terminal or pole of each accumulator into pressing contact against a portion of each lug held on the lateral edge and/or longitudinal edge of the support in which said accumulator is housed;
iv/ stacking the supports with one another with snap-fitting or clipping engagement.
